(19) **Europäisches Patentamt / European Patent Office / Office européen des brevets**

(11) **EP 3 267 438 B1**

(12) **EUROPEAN PATENT SPECIFICATION**

(45) Date of publication and mention
of the grant of the patent:
**25.11.2020 Bulletin 2020/48**

(21) Application number: **16305847.2**

(22) Date of filing: **05.07.2016**

(51) Int Cl.:
*G10L 17/18* (2013.01)   *G10L 25/93* (2013.01)
*G10L 15/16* (2006.01)   *G10L 15/07* (2013.01)
*G06N 3/08* (2006.01)   *G10L 25/30* (2013.01)
*G06N 3/04* (2006.01)

(54) **SPEAKER AUTHENTICATION WITH ARTIFICIAL NEURAL NETWORKS**

SPRECHER AUTHENTIFIZIERUNG MIT KÜNSTLICHEN NEURONALEN NETZWERKEN

AUTHENTIFICATION DE LOCUTEUR UTILISANT DES RÉSEAUX DE NEURONES ARTIFICIELS:

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2018 Bulletin 2018/02**

(73) Proprietor: **NXP B.V.**
**5656 AG Eindhoven (NL)**

(72) Inventor: **DANIEL, Adrien**
**5656 AG Eindhoven (NL)**

(74) Representative: **Krott, Michel**
**NXP Semiconductors**
**Intellectual Property & Licensing**
**High Tech Campus 60**
**5656 AG  Eindhoven (NL)**

(56) References cited:
**EP-A1- 2 221 805**    **EP-A2- 0 574 951**
**WO-A1-2015/198317**   **WO-A1-2017/052739**
**US-A1- 2016 078 863**

- **NIKOS FAKOTAKIS ET AL: "HIGH PERFORMANCE TEXT-INDEPENDENT SPEAKER RECOGNITION SYSTEM BASED ON VOICED/UNVOICED SEGMENTATION AND MULTIPLE NEURAL NETS", EUROSPEECH 1999, vol. 2, 1 January 1999 (1999-01-01), page 979, XP007001144,**
- **FARRELL K R ET AL: "Speaker identification using neural tree networks", PROCEEDINGS OF ICASSP '94. IEEE INTERNATIONAL CONFERENCE ON ACOUSTICS, SPEECH AND SIGNAL PROCESSING; 19-22 APRIL 1994; ADELAIDE, SA, AUSTRALIA, IEEE SERVICE CENTER, PISCATAWAY, NJ, vol. i, 19 April 1994 (1994-04-19), pages I/165-I/168, XP010133567, DOI: 10.1109/ICASSP.1994.389329 ISBN: 978-0-7803-1775-8**
- **KENNETH O. STANLEY; RISTO MIIKKULAINEN: "Evolving Neural Networks through Augmenting Topologies", THE JOURNAL EVOLUTIONARY COMPUTATION, vol. 10, no. 2, 2002, pages 99-127, XP002765543,**
- **TARA N SAINATH ET AL: "Learning the Speech Front-end with Raw Waveform CLDNNs", PROCEEDINGS INTERSPEECH 2015, DRESDEN, GERMANY , 6 September 2015 (2015-09-06), pages 1-5, XP002761544, Retrieved from the Internet: URL:http://static.googleusercontent.com/media/research.google.com/en//pubs/archive/43960.pdf**

## Description

FIELD

The present disclosure relates to a method for facilitating the detection of one or more time series patterns. Furthermore, the present disclosure relates to a corresponding computer program, non-transitory computer-readable medium and system.

BACKGROUND

Time series patterns are patterns of data points made over continuous time intervals out of successive measurements across said intervals, using equal spacing between every two consecutive measurements and with each time unit within the time intervals having at most one data point. Examples of time series patterns are audio patterns, such as sound patterns and human speech patterns. It may be useful to detect specific time series patterns, for example in order to recognize particular events or contexts (e.g., starting a car or being present in a running car) and to distinguish and identify different speakers. Furthermore, it may be useful to make such detections easier.

The article "High Performance Text-Independent Speaker Recognition System Based On Voiced/Unvoiced Segmentation And Multiple Neural Nets", by Nikos Fakotakis, John Sirigos and George Kokkinakis, published at EUROSPEECH 1999, describes a text-independent speaker recognition system based on the voiced segments of the speech signal. The proposed system uses feedforward multilayer perceptron (MLP) classification with only a limited amount of training and testing data and gives a comparatively high accuracy.

The article "Speaker Identification Using Neural Tree Networks", by Kevin R. Farrell and Richard J. Mammone, published at ICASSP 1994, describes a modified neural tree network (NTN) for use in text independent speaker identification. The NTN is a hierarchical classifier that combines the properties of decision trees and feedforward neural networks. The modified NTN uses discrimmant learning to partition feature space as opposed to the more common clustering approaches, such as vector quantization.

EP 2 221 805 A1 describes a method for automated training of a plurality of artificial neural networks for phoneme recognition using training data, wherein the training data comprises speech signals subdivided into frames, each frame associated with a phoneme label, wherein the phoneme label indicates a phoneme associated with the frame, the method comprising the steps of: providing a sequence of frames from the training data, wherein the number of frames in the sequence of frames is at least equal to the number of artificial neural networks, assigning to each of the artificial neural networks a different subsequence of the provided sequence, wherein each subsequence comprises a predetermined number of frames, determining a common phoneme label for the sequence of frames based on the phoneme labels of one or more frames of one or more subsequences of the provided sequence, and training each artificial neural network using the common phoneme label.

EP 0 574 951 A2 describes a speech recognition system that can recognize a plurality of voice data having differents patterns. The speech recognition system has a voice recognizing and processing device including a plurality of speech recognition neural networks that have previously learned different voice patterns to recognize given voice data, each of the speech recognition neural networks being adapted to judge whether or not input voice data coincides with one of the voice data to be recognized and to output adaptation judgment data representing the adaptation in speech recognition, a selector responsive to the adaptation judgment data from each of the speech recognition neural networks for selecting one of the neural networks that has the highest adaptation in speech recognition, and an output control device for outputting the result of speech recognition from the speech recognition neural network selected by the selector means.

SUMMARY

According to a first aspect of the present disclosure, a method for facilitating the detection of one or more time series patterns is conceived as defined in claim 1.

In one or more embodiments of the method, building said artificial neural networks comprises employing neuroevolution of augmenting topologies.

In one or more embodiments of the method, the artificial neural networks are stored for subsequent use in a detection task.

In one or more embodiments of the method, each time series pattern to be detected represents a class of said detection task.

In one or more embodiments of the method, said time series patterns are audio patterns.

In one or more embodiments of the method, the audio patterns include at least one of the group of: voiced speech, unvoiced speech, user-specific speech, contextual sound, a sound event.

According to a second aspect of the present disclosure, a computer program is provided according to claim 7.

According to a third aspect of the present disclosure, a non-transitory computer-readable medium is provided according to claim 8.

According to a fourth aspect of the present disclosure, a system for facilitating the detection of one or more time series patterns is provided as defined in claim 9.

In one or more embodiments of the system, the network building unit is configured to employ neuroevolution of augmenting topologies for building said artificial neural networks.

In one or more embodiments of the system, the system further comprises a storage unit, and the network building unit is further configured to store the artificial neural networks in said storage unit for subsequent use in a detection task.

## DESCRIPTION OF DRAWINGS

Embodiments will be described in more detail with reference to the appended drawings, in which:

> Fig. 1 shows an illustrative embodiment of a pattern detection facilitation method;
> Fig. 2 shows another illustrative embodiment of a pattern detection facilitation method;
> Fig. 3 shows an illustrative embodiment of a pattern detection facilitation system;
> Fig. 4 shows an illustrative embodiment of a pattern detection system;
> Figs. 5(a)-(d) show illustrative embodiments of artificial neural networks;
> Fig. 6 shows another illustrative embodiment of an artificial neural network.

## DESCRIPTION OF EMBODIMENTS

As mentioned above, it may be useful to facilitate the detection of time series patterns. For example, in order to recognize particular audio events or contexts and to distinguish and identify different speakers, it may be necessary to detect specific time series patterns in an audio signal. Therefore, in accordance with the present disclosure, a method for facilitating the detection of one or more time series patterns is conceived, comprising building one or more artificial neural networks, wherein, for at least one time series pattern to be detected, a specific one of said artificial neural networks is built.

Normally, a set of features is computed from an input signal before the input signal is classified. The so-called Mel-Frequency Cepstral Coefficients (MFCCs) are an example of such features. Then, the extracted features are provided to a classifier that performs the classification task. The extraction of features reduces the input dimensionality, which in turn facilitates the classification task. However, reducing the input dimensionality may also negatively impact the pattern detection process. For instance, in case of a speaker authentication task, the same set of features is extracted, whoever the target speaker is. This impedes catching the characteristics that are very specific to a given speaker, which in turn may result in misidentifications. In accordance with the present disclosure, building an artificial neural network (ANN) which is specific for the time series pattern corresponding to the target speaker facilitates catching the characteristics that are specific to said speaker. In particular, the specific ANN may subsequently be used as a classifier that may receive an input signal (e.g., a raw input signal that has not been preprocessed by a feature extractor), and that may detect the time series pattern corresponding to the target speaker within said signal. It is noted that the ANN may be built, at least partially, by a computer program in the manner as described herein by way of example. The inventor has found that the presently disclosed method and corresponding system are particularly suitable for facilitating the detection of audio patterns; however, their application is not limited thereto.

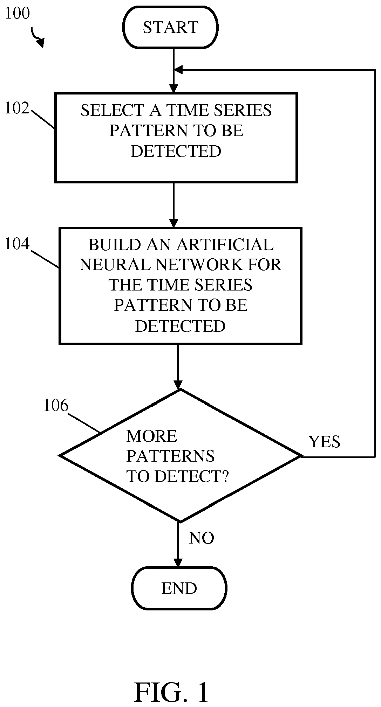

Fig. 1 shows an illustrative embodiment of a pattern detection facilitation method 100. The method 100 comprises, at 102, selecting a time series pattern to be detected. For instance, the selected time series pattern may be an audio pattern, in particular user-specific speech, voiced speech (vowels), unvoiced speech (consonants), contextual sound (e.g., a running car) or a sound event (e.g., starting a car). Furthermore, the method 100 comprises, at 104, building an ANN for the selected time series pattern. Then, at 106, it is checked whether more time series patterns should be detected. If so, the method 100 repeats steps 102 and 104 for each further time series pattern to be detected. If there are no more patterns to detect, the method 100 ends.

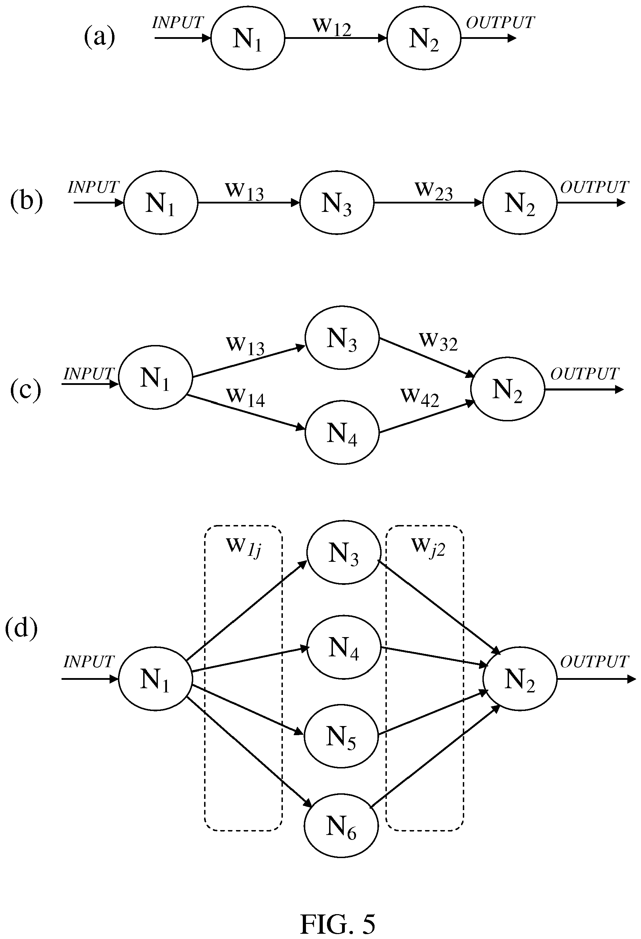

In one or more embodiments, building the ANNs comprises employing neuroevolution of augmenting topologies (NEAT). In this way, it is easier to find the specificity of selected time series patterns and the resulting ANNs may have a minimal topology, so that computing resources may be saved. Neuroevolution refers to a method for artificially evolving neural networks using genetic algorithms. The product obtained when applying such a method is called an artificial neural network (ANN); simple example ANNs are described herein with reference to Figs. 5(a)-(d). Furthermore, NEAT refers to a neuroevolution method wherein the structure of an evolving neural network is grown incrementally, such that the topology of the network may be minimized. More specifically, the number of network nodes and the connections therebetween may be kept to a minimum, while the network still performs the desired task. The NEAT methodology has been described in, among others, US 2008/0267419 A1 and the article "Evolving Neural Networks through Augmenting Topologies", by Kenneth O. Stanley and Risto Miikkulainen in the journal Evolutionary Computation, Volume 10 Issue 2, Summer 2002, pages 99-127.

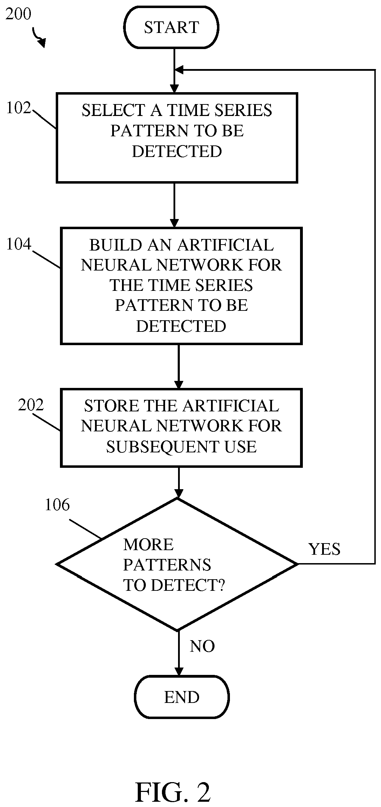

Fig. 2 shows another illustrative embodiment of a pattern detection facilitation method 200. The method 200 comprises, in addition to the steps 102, 104, 106, already shown in Fig. 1, storing, at 202, each ANN built in step 104 for subsequent use. Thereby, the use of the ANN or ANNs in a pattern detection task may be facilitated. The ANN or ANNs may for example be stored in a memory of a pattern detection system or pattern detection device that performs said pattern detection task.

In one or more embodiments, each time series pattern to be detected represents a class of a pattern detection task. Thus, more specifically, a separate ANN may be evolved for each class of the detection task; the ANN thus effectively constitutes a model of the class. Normally, pattern detectors extract, for a given task, the same set of features for all classes. In other words, depending on its coordinates in a fixed space, a given feature vector will be classified as belonging to class C. This means that for instance, in an audio context recognition task, class "car" is distinguished from class "office" within the same feature space. In a speaker authentication task, speaker A and speaker B are authenticated within the same feature space. That is to say, speaker A is distinguished from any other speaker within the same space as for speaker B. In both examples, using the same feature space for all classes reduces the power of exploiting the specificities of each class. By evolving a separate ANN for each class or each speaker of the detection task, this may be avoided. Furthermore, in one or more embodiments, a raw time series signal is provided as an input to each artificial neural network that is built. In that case, it is left to the network to extract the relevant features for the pattern to be detected, and it is more likely that the specific characteristics of said pattern are caught. That is to say, the aforementioned commonly used feature extractor may be omitted.

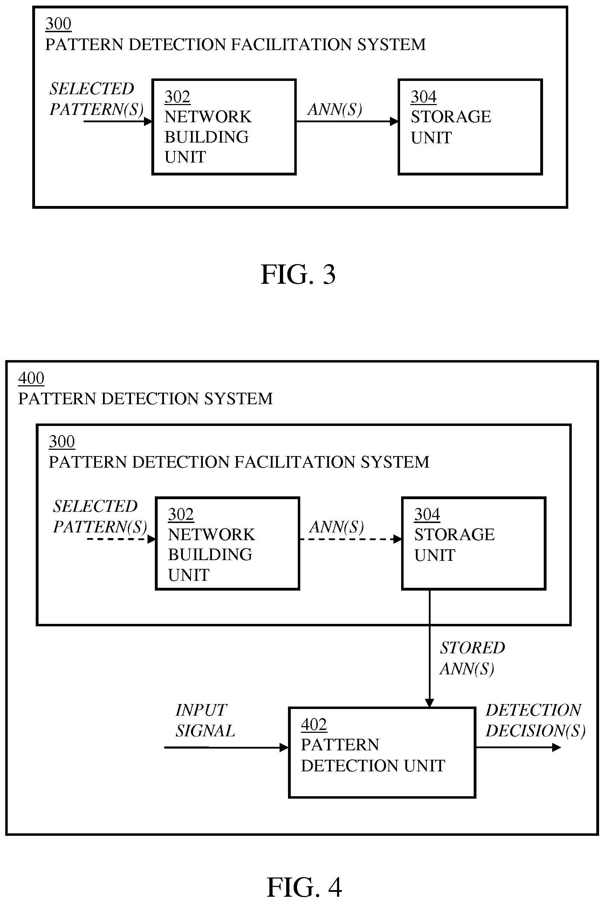

**Fig. 3** shows an illustrative embodiment of a pattern detection facilitation system 300. The system 300 comprises a network building unit 302 operatively coupled to a storage unit 304. The network building unit 302 is configured to build one or more ANNs. In particular, the network building unit 302 is configured to build, for each selected time series pattern to be detected, a specific ANN. Furthermore, the network building unit 302 may be configured to store the ANN or ANNs in the storage unit 304. The storage unit 304 may be any memory which is suitable for integration into the system 300.

**Fig. 4** shows an illustrative embodiment of a pattern detection system 400. The pattern detection system 400 comprises the pattern detection facilitation system 300 shown in Fig. 3. The pattern detection facilitation system 300 may build and store one or more ANNs which are specific to selected time series patterns to be detected; this may be done, for example, in a training or enrolment mode of the pattern detection system 400. Furthermore, the pattern detection system 400 comprises a pattern detection unit 402 operatively coupled to the storage unit 304. The pattern detection unit 402 may detect one or more time series patterns in an input signal provided to said pattern detection unit 402, and output one or more corresponding detection decisions. This may be done, for instance, in an operational mode of the pattern detection system 400. In a practical and efficient implementation, a detection decision may be represented by a simple Boolean variable: one value may represent a "pattern detected" decision, while the other value may represent a "pattern not detected" decision.

**Figs. 5(a)-(d)** show illustrative embodiments of artificial neural networks. In particular, they show examples of ANNs that may be evolved in accordance with the present disclosure. Each network node $N_1$-$N_6$ represents a processing element that forms part of a pattern detection task. Each processing elements performs a function on its received input. In the field of ANNs, the network nodes $N_3$ in Fig. 5(b), $N_3$ and $N_4$ in Fig. 5(c), and $N_3$-$N_6$ in Fig. 5(c), are often referred to as hidden nodes. Furthermore, the network nodes $N_1$-$N_6$ are connected to each other by connections having a certain weight $w_{12}$, $w_{13}$, $w_{32}$, $w_{34}$, $w_{42}$, $w_{1j}$, $w_{j2}$. In accordance with the principles of an ANN, the input to a processing element is multiplied by the weight of the connection through which the input is received. According to the principles of NEAT, an evolving ANN is grown incrementally. For example, initially a simple ANN may be chosen, as shown in Fig. 5(a), and it may be tested by means of a fitness function whether this simple ANN would correctly detect a selected pattern. If the fitness function has an output below a certain threshold, the ANN under development may be extended, for example by adding one or more network nodes and/or connections, following evolutionary heuristics. For instance, the simple ANN of Fig. 5(a) may be extended to the ANN shown in Fig. 5(b). Again, it may be tested by means of said fitness function whether the ANN would correctly detect a selected pattern. If not, the ANN under development may be again extended, for example to the ANN shown in Fig. 5(c). Eventually, this iterative process may yield an ANN that correctly detects the selected pattern, for example the ANN shown in Fig. 5(d), or a more complex ANN (not shown). It is noted that the process illustrated in Figs. 5(a)-(d) is a simplified process. In reality, for example, hidden nodes are not necessarily added in "parallel" (i.e. across a single layer), but they can follow any topology. Furthermore, connections are not necessarily forward connections, but they can be recurrent as well.

In the following explanation, the term "unit" refers to a node in an ANN. Specifically, the term "input unit" refers to a node that receives the input for the whole ANN, for example node $N_1$ in Figs. 5(a)-(d). This input should not be confused with the (weighted) inputs of the individual nodes of the ANN, as discussed above. Furthermore, the term "output unit" refers to a node that produces the output of the ANN, for example node $N_2$ in Figs. 5(a)-(d). It is noted that an ANN may have multiple inputs and/or multiple outputs (not shown).

In general, NEAT requires specifying an optimization setup. In particular, the following should be specified:

- the number of input units of the ANN to evolve;
- the number of output units of the ANN to evolve;
- a fitness function, which is used to evaluate and select the best solution among a population of evolved, individual ANNs.

In a simple implementation the presently disclosed method and system may use NEAT to evolve an ANN that takes a single input, i.e. one sample of a time series input signal, and one output, i.e. a detection decision. For a given generation, each individual of the population of solution candidates will be evaluated using the fitness function. Hence this fitness function should reflect the way in which the ANN is intended to be used in practice.

The voiced/unvoiced classification (i.e., the distinction between vowels and consonants in a speech signal) may be taken as an example. The fitness function may feed a test speech signal of length N into an individual ANN under consideration and evaluate its output. To do so, each sample of the test speech signal is placed, one after the other, at the input of the ANN, and one single activation step will be performed. An activation step consists of propagating the output of each unit (including the output of the input unit and the output of a bias unit) to the unit to which they are connected, and then updating the outputs of all units (including the output of the output unit). The bias unit is an input unit with a constant value, usually 1. It permits to add any constant value to the input of any unit in the network by creating a connection from the bias unit.

By repeating this operation until the entire input signal has been fed into the network and reading at each step the value out of the output unit, an output signal is obtained. Let **input[i]** be the $i^{th}$ sample of the input signal. The simplest fitness value can be expressed as:

$$\mathbf{fitness} = \frac{1}{N} \sum_{i=1}^{N} 1 - |\mathbf{truth}[i] - \mathbf{output}[i]|$$

where **truth [i]** equals **1** when **input [i]** is voiced and **0** otherwise. This value is returned as the fitness of the individual under evaluation.

The proposed evaluation algorithm can be summarized as:

0. Start with pointer $i$ = 0
1. Place input[$i$] as the output of the input unit of the ANN
2. Perform one activation step of the ANN
3. Store the output of the output unit of the ANN as output[$i$]
4. If i < $N-1$, increase i by one and go to step 1
5. Compute and return the fitness for this individual

Once all individuals of the population of the current generation have been evaluated, those with a higher fitness are kept to generate the population of the next generation. When the champion of the current generation gives satisfying results (e.g., when the fitness value of the champion exceeds a predefined threshold) the optimization process has finished. In this example, this champion is the evolved ANN that is stored for subsequent use in the pattern detection task.

In accordance with the present disclosure, this optimization process may be performed for each class to detect. Taking the example of a speaker authentication task, an ANN may be evolved for each speaker to authenticate. The test input signal is a speech signal wherein each sample is either part of a speech segment uttered by the target speaker, or by one of a cohort of non-target (impostor) speakers. To improve performance on the speaker authentication task, two ANNs may be evolved for each speaker: one to authenticate on voiced segments and one to authenticate on unvoiced segments.

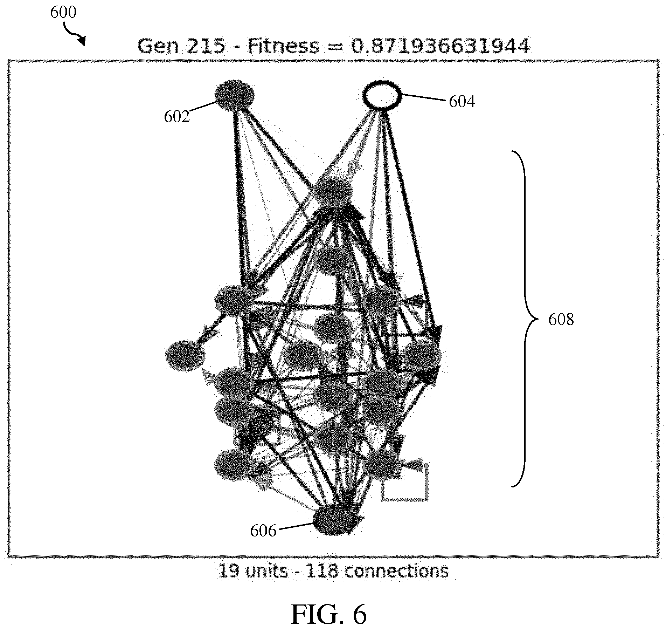

**Fig. 6** shows another illustrative embodiment of an artificial neural network 600. In particular, it shows the topology obtained for an authentication system trained on voiced segments of a female speaker at a sampling rate of 16000 Hz. More specifically, it shows an individual ANN of the 215<sup>th</sup> generation, having 19 units (i.e., network nodes) and 118 weighted connections, and a fitness value of 0.871936631944. The ANN 600 comprises an input unit 600, a bias unit 604, an output unit 606, and a plurality of hidden units 608. The ANN 600 has been generated using the above-described optimization process.

In more complex applications of the presently disclosed method and system, the ANN to evolve may have multiple inputs, especially when a variant of NEAT like HyperNEAT is used, and/or multiple outputs. Multiple outputs are especially useful when the ANN is not expected to output a decision value, but rather a feature vector meant to be fed into a subsequent classifier such as a support vector machine (SVM). The training and testing of this classifier may then be included in the fitness function.

As mentioned above, the presently disclosed method and system are particularly useful for facilitating the detection of audio patterns. For example, the following use cases of the presently disclosed method and system are envisaged: audio context recognition (e.g., car, office, park), predefined audio pattern recognition (e.g. baby cry, glass breaking, fire alarm), speaker authentication/recognition, voice activity detection (i.e., detection of the presence of speech in a signal), and voicing probability (i.e., vowel/consonant distinction in a speech signal).

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

LIST OF REFERENCE SIGNS

| 100 | pattern detection facilitation method |
| 102 | select a time series pattern to be detected |
| 104 | build an artificial neural network for the time series pattern to be detected |
| 106 | more patterns to detect? |
| 200 | pattern detection facilitation method |
| 202 | store the artificial neural network for subsequent use |
| 300 | pattern detection facilitation system |
| 302 | network building unit |
| 304 | storage unit |
| 400 | pattern detection system |
| 402 | pattern detection unit |
| $N_1$-$N_6$ | network nodes |
| $w_{12}$ | connection weight |
| $w_{13}$ | connection weight |
| $w_{32}$ | connection weight |
| $w_{14}$ | connection weight |
| $w_{42}$ | connection weight |
| $w_{1j}$ | connection weights |
| $w_{j2}$ | connection weights |
| 600 | artificial neural network |

| 602 | input unit |
|---|---|
| 604 | bias unit |
| 606 | output unit |
| 608 | hidden units |

**Claims**

1. A method (100, 200) for facilitating the detection of one or more time series patterns, comprising building (104) one or more artificial neural networks, wherein, for at least one time series pattern to be detected, a specific one of said artificial neural networks is built, wherein a raw time series signal is provided as an input to each artificial neural network that is built; wherein the detection of the time series patterns forms part of a speaker authentication function, wherein, for each speaker to be authenticated, at least one artificial neural network is built for detecting speech segments of said speaker; **characterized in that**, for each speaker to be authenticated, an artificial neural network is built for detecting voiced speech segments of said speaker, and another artificial neural network is built for detecting unvoiced speech segments of said speaker.

2. A method (100, 200) as claimed in claim 1, wherein building (104) said artificial neural networks comprises employing neuroevolution of augmenting topologies.

3. A method (100, 200) as claimed in claim 1 or 2, wherein the artificial neural networks are stored (202) for subsequent use in a detection task.

4. A method (100, 200) as claimed in claim 3, wherein each time series pattern to be detected represents a class of said detection task.

5. A method (100, 200) as claimed in any preceding claim, wherein said time series patterns are audio patterns.

6. A method (100, 200) as claimed in claim 5, wherein the audio patterns include at least one of the group of: voiced speech, unvoiced speech, user-specific speech, contextual sound, a sound event.

7. A computer program comprising instructions which, when the program is executed by a computer, cause the computer to carry out a method (100, 200) as claimed in any preceding claim.

8. A non-transitory computer-readable medium comprising a computer program as claimed in claim 7.

9. A system (300) for facilitating the detection of one or more time series patterns, comprising a network building unit (302) configured to build one or more artificial neural networks, wherein, for at least one time series pattern to be detected, the network building unit (302) is configured to build a specific one of said artificial neural networks, wherein the network building unit (302) is further configured to provide a raw time series signal as an input to each artificial neural network that is built; wherein the detection of the time series patterns forms part of a speaker authentication function, wherein the network building unit (302) is further configured to build, for each speaker to be authenticated, at least one artificial neural network for detecting speech segments of said speaker; **characterized in that** the network building unit (302) is further configured to build, for each speaker to be authenticated, an artificial neural network for detecting voiced speech segments of said speaker, and another artificial neural network for detecting unvoiced speech segments of said speaker.

10. A system (300) as claimed in claim 9, wherein the network building unit (302) is configured to employ neuroevolution of augmenting topologies for building said artificial neural networks.

11. A system (300) as claimed in claim 9 or 10, further comprising a storage unit (304), wherein the network building unit (302) is further configured to store the artificial neural networks in said storage unit (304) for subsequent use in a detection task.

**Patentansprüche**

1. Verfahren (100, 200) zur Vereinfachung der Erkennung von einem oder mehreren Zeitreihenmustern, umfassend das Aufbauen (104) von einem oder mehreren künstlichen neuronalen Netzen, wobei für mindestens ein zu erkennendes Zeitreihenmuster ein spezifisches künstliches neuronales Netz aufgebaut wird, wobei ein Zeitreihenrohsignal als eine Eingabe für jedes künstliche neuronale Netz, das aufgebaut wird, bereitgestellt wird; wobei die Erkennung der Zeitreihenmuster Teil einer Sprecherauthentifizierungsfunktion ist, wobei für jeden zu authentifizierenden Sprecher mindestens ein künstliches neuronales Netz zum Erkennen von Sprachsegmenten des Sprechers aufgebaut wird; **dadurch gekennzeichnet, dass** für jeden zu authentifizierenden Sprecher ein künstliches neuronales Netz zum Erkennen von stimmhaften Sprachsegmenten des Sprechers aufgebaut wird und ein anderes künstliches neuronales Netz zum Erkennen von stimmlosen Sprachsegmenten des Sprechers aufgebaut wird.

2. Verfahren (100, 200) nach Anspruch 1, wobei das Aufbauen (104) der künstlichen neuronalen Netze das Verwenden von Neuroevolution of Augmenting Topologies (genetischer Algorithmus zum Evolvieren künstlicher neuronaler Netze) umfasst.

3. Verfahren (100, 200) nach Anspruch 1 oder 2, wobei die künstlichen neuronalen Netze zur späteren Verwendung in einer Erkennungsaufgabe gespeichert werden (202).

4. Verfahren (100, 200) nach Anspruch 3, wobei jedes zu erkennende Zeitreihenmuster eine Klasse der Erkennungsaufgaben darstellt.

5. Verfahren (100, 200) nach einem vorhergehenden Anspruch, wobei die Zeitreihenmuster Audiomuster sind.

6. Verfahren (100, 200) nach Anspruch 5, wobei die Audiomuster mindestens eins umfassen aus der Gruppe aus: stimmhafter Sprache, stimmloser Sprache, benutzerspezifischer Sprache, kontextuellem Klang, einem Klangereignis.

7. Computerprogramm, umfassend Anweisungen, die, wenn das Programm von einem Computer ausgeführt wird, bewirken, dass der Computer ein Verfahren (100, 200) nach einem vorhergehenden Anspruch ausführt.

8. Nichtflüchtiges computerlesbares Medium, umfassend ein Computerprogramm nach Anspruch 7.

9. System (300) zur Vereinfachung der Erkennung von einem oder mehreren Zeitreihenmustern, umfassend eine Netzaufbaueinheit (302), die dazu ausgelegt ist, ein oder mehrere künstliche neuronale Netze aufzubauen, wobei für mindestens ein zu erkennendes Zeitreihenmuster, die Netzaufbaueinheit (302) dazu ausgelegt ist, ein spezifisches künstliches neuronales Netz aufzubauen, wobei die Netzaufbaueinheit (302) ferner dazu ausgelegt ist, ein Zeitreihenrohsignal als eine Eingabe für jedes künstliche neuronale Netz, das gebildet wird, bereitzustellen; wobei die Erkennung der Zeitreihenmuster Teil einer Sprecherauthentifizierungsfunktion ist, wobei die Netzaufbaueinheit (302) ferner dazu ausgelegt ist, für jeden zu authentifizierenden Sprecher mindestens ein künstliches neuronales Netz zur Erkennung von Sprachsegmenten des Sprechers aufzubauen; **dadurch gekennzeichnet, dass** die Netzaufbaueinheit (302) ferner dazu ausgelegt ist, für jeden zu authentifizierenden Sprecher ein künstliches neuronales Netz zum Erkennen von stimmhaften Sprachsegmenten des Sprechers und ein anderes künstliches neuronales Netz zum Erkennen von stimmlosen Sprachsegmenten des Sprechers aufzubauen.

10. System (300) nach Anspruch 9, wobei die Netzaufbaueinheit (302) dazu ausgelegt ist, Neuroevolution of Augmenting Topologies zum Aufbauen der künstlichen neuronalen Netze zu verwenden.

11. System (300) nach Anspruch 9 oder 10, ferner umfassend eine Speichereinheit (304), wobei die Netzaufbaueinheit (302) ferner dazu ausgelegt ist, die künstlichen neuronalen Netze in der Speichereinheit (304) zur späteren Verwendung in einer Erkennungsaufgabe zu speichern.

**Revendications**

1. Procédé (100, 200) pour faciliter la détection d'un ou de plusieurs motifs chronologiques, comprenant la construction (104) d'un ou plusieurs réseaux de neurones artificiels, dans lequel, pour au moins un motif chronologique à détecter, un réseau spécifique desdits réseaux de neurones artificiels est construit, dans lequel un signal chronologique brut est fourni en tant qu'entrée dans chaque réseau de neurones artificiels qui est construit ;
dans lequel la détection des motifs chronologiques fait partie d'une fonction d'authentification de locuteur, dans lequel, pour chaque locuteur à authentifier, au moins un réseau de neurones artificiels est construit pour détecter des segments de paroles dudit locuteur ;
**caractérisé en ce que**, pour chaque locuteur à authentifier, un réseau de neurones artificiels est construit pour détecter des segments de paroles vocalisées dudit locuteur, et un autre réseau de neurones artificiels est construit pour détecter des segments de paroles non vocalisées dudit locuteur.

2. Procédé (100, 200) selon la revendication 1, dans lequel la construction (104) desdits réseaux de neurones artificiels comprend l'utilisation d'une neuroévolution de topologies augmentées.

3. Procédé (100, 200) selon la revendication 1 ou 2, dans lequel les réseaux de neurones artificiels sont mémorisés (202) pour une utilisation ultérieure dans une tâche de détection.

4. Procédé (100, 200) selon la revendication 3, dans lequel chaque motif chronologique à détecter représente une classe de ladite tâche de détection.

5. Procédé (100, 200) selon l'une quelconque des revendications précédentes, dans lequel lesdits motifs chronologiques sont des motifs audio.

6. Procédé (100, 200) selon la revendication 5, dans lequel les motifs audio comprennent au moins un élément du groupe suivant : parole vocalisée, parole non vocalisée, parole spécifique à l'utilisateur, son contextuel, événement sonore.

7. Programme informatique comprenant des instructions qui, lorsque le programme est exécuté par un ordinateur, amènent l'ordinateur à exécuter un procédé (100, 200) selon l'une quelconque des revendications précédentes.

8. Support non transitoire lisible par ordinateur comprenant un programme informatique selon la revendication 7.

9. Système (300) pour faciliter la détection d'un ou de plusieurs motifs chronologiques, comprenant une unité de construction de réseaux (302) configurée pour construire un ou plusieurs réseaux de neurones artificiels, dans lequel, pour au moins un motif chronologique à détecter, l'unité de construction de réseaux (302) est configurée pour construire un réseau spécifique desdits réseaux de neurones artificiels, dans lequel l'unité de construction de réseaux (302) est en outre configurée pour fournir un signal chronologique brut en tant qu'entrée dans chaque réseau de neurones artificiels qui est construit ; dans lequel la détection des motifs chronologiques fait partie d'une fonction d'authentification de locuteur, dans lequel l'unité de construction de réseaux (302) est en outre configurée pour construire, pour chaque locuteur à authentifier, au moins un réseau de neurones artificiels pour détecter des segments de paroles dudit locuteur ; **caractérisé en ce que** l'unité de construction de réseaux (302) est en outre configurée pour construire, pour chaque locuteur à authentifier, un réseau de neurones artificiels pour détecter des segments de paroles vocalisées dudit locuteur, et un autre réseau de neurones artificiels pour détecter des segments de paroles non vocalisées dudit locuteur.

10. Système (300) selon la revendication 9, dans lequel l'unité de construction de réseaux (302) est configurée pour utiliser une neuroévolution de topologies augmentées pour construire lesdits réseaux de neurones artificiels.

11. Système (300) selon la revendication 9 ou 10, comprenant en outre une unité de mémoire (304), dans lequel l'unité de construction de réseaux (302) est en outre configurée pour mémoriser les réseaux de neurones artificiels dans ladite unité de mémoire (304) pour une utilisation ultérieure dans une tâche de détection.

100

START

102
SELECT A TIME SERIES
PATTERN TO BE
DETECTED

104
BUILD AN ARTIFICIAL
NEURAL NETWORK FOR
THE TIME SERIES
PATTERN TO BE
DETECTED

106
MORE
PATTERNS
TO DETECT?

YES

NO

END

FIG. 1

200

START

102 — SELECT A TIME SERIES
PATTERN TO BE
DETECTED

104 — BUILD AN ARTIFICIAL
NEURAL NETWORK FOR
THE TIME SERIES
PATTERN TO BE
DETECTED

202 — STORE THE ARTIFICIAL
NEURAL NETWORK FOR
SUBSEQUENT USE

106 — MORE
PATTERNS
TO DETECT?

YES

NO

END

FIG. 2

300
PATTERN DETECTION FACILITATION SYSTEM

SELECTED
PATTERN(S)

302
NETWORK
BUILDING
UNIT

ANN(S)

304
STORAGE
UNIT

FIG. 3

400
PATTERN DETECTION SYSTEM

300
PATTERN DETECTION FACILITATION SYSTEM

SELECTED
PATTERN(S)

302
NETWORK
BUILDING
UNIT

ANN(S)

304
STORAGE
UNIT

STORED
ANN(S)

INPUT
SIGNAL

402
PATTERN
DETECTION UNIT

DETECTION
DECISION(S)

FIG. 4

FIG. 5

Gen 215 - Fitness = 0.871936631944

600

602 604

608

606

19 units - 118 connections

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2221805 A1
- EP 0574951 A2

- US 20080267419 A1

### Non-patent literature cited in the description

- **NIKOS FAKOTAKIS ; JOHN SIRIGOS ; GEORGE KOKKINAKIS.** High Performance Text-Independent Speaker Recognition System Based On Voiced/Unvoiced Segmentation And Multiple Neural Nets. *EUROSPEECH,* 1999

- **KEVIN R. FARRELL ; RICHARD J. MAMMONE.** Speaker Identification Using Neural Tree Networks. *ICASSP,* 1994
- **KENNETH O. STANLEY ; RISTO MIIKKULAINEN.** Evolving Neural Networks through Augmenting Topologies. *journal Evolutionary Computation,* 2002, vol. 10 (2), 99-127